# EUROPÄISCHE PATENTSCHRIFT

(11) **EP 0 487 500 B1**
(45) Veröffentlichungstag und Bekanntmachung des Hinweises auf die Patenterteilung: **13.07.1994**
(21) Anmeldenummer: 91890290.9
(22) Anmeldetag: 19.11.1991
(51) Int. Cl.: E03C 1/04, E03C 1/06, F16K 11/00

(54) **Umstellmechanismus zur Steuerung des Wasserflusses von Wannenzulauf- auf Handbrausebetrieb**
Actuating mechanism for change-over of the water flow from bath inlet to shower
Mécanisme pour changer le courant de fluide du bain à la douche

(30) Priorität: 23.11.1990 AT 2383/90; 19.11.1991 AT 2298/91
(43) Veröffentlichungstag der Anmeldung: 27.05.1992
(73) Patentinhaber: Schmiedl, Thomas, A-1050 Wien (AT)
(72) Erfinder: Schmiedl, Thomas, A-1050 Wien (AT)

(56) Entgegenhaltungen:
- DE-B- 1 101 303
- FR-A- 1 592 930
- FR-A- 2 438 866

## Beschreibung

Die Erfindung betrifft einen Umstellmemchanismus zur Steuerung des Wasserflusses von Wannenzulauf- auf Handbrausebetrieb, mit einem durch die Bewegung der Handbrause betätigbaren Umschaltventil, welches zwischen einer die Öffnung zur Leitung der Handbrause freigebenden ersten Stellung und einer die Öffnung zur Leitung der Wannenarmaturen freigebenden zweiten Stellung umschaltbar ist, wobei die erste Stellung bei herausgezogener und die zweite Stellung bei hineingesteckter Handbrause vorliegt.

Bis heute kommen folgende Varianten zum Einsatz:
1.
   1 Wannenauslauf
   4 Seitenventile
   1 versenkbare Handbrause
2.
   1 Wannenauslauf
   2 Seitenventile
   1 versenkbare Handbrause
   1 Umstellhahn
3.
   1 Wannenauslauf mit eingebautem Zugumsteller
   2 Seitenventile
   1 versenkbare Handbrause

Die Variante 1 hat den Nachteil, daß zu viele Löcher gebohrt werden müssen (6 Loch Variante) und durch die Menge der Teile am teuersten ist.

Die Variante 2 benötigt zwar um 1 Loch weniger (5 Loch Variante), ist aber durch den notwendigen Umstellhahn immer noch zu aufwendig und zu teuer.

Die Variante 3 ist die derzeit günstigste (4 Loch Variante), hat aber die Nachteile, daß eine Bohrung in den Körper des Auslaufes gebohrt, ein risikoreiches T-Stück am Auslauf angeschlossen werden muß, und außerdem ist es sehr unpraktisch , am konstruktionsbedingten kleinen Zugknopf eine Umstellung vorzunehmen. Auch hält sich die Durchflußmenge in Grenzen. Bei Wanneneinläufen neueren Designs ist auch oft gar keine Möglichkeit, einen Zugknopf unterzubringen, sei es aus technischen oder optischen Gründen.

In jedem Fall muß in nachteiliger Weise ein Umstellmechanismus betätigt werden, welcher jeweils zwei verschiedene Wege freigibt, wie z.B. Umstellung von Handbrause auf Wanneneinlauf oder umgekehrt. Aufgabe der Erfindung ist die Schaffung von Maßnahmen, durch welche die Nachteile der bekannten Konstruktionen vermieden werden.

Diese Aufgabe wird erfindungsgemäß dadurch gelöst, daß der das Umschaltventil (12) betätigende Umstellschieber (8) durch die Schlauchdurchführung der Handbrause (1) gebildet und parallel zur Bewegungsrichtung des Brauseschlauches (2) bewegbar ist.

Durch diese Konstruktion wird gegenüber den bekannten Konstruktionen, wie DE-B-1,101,303, eine wesentliche Vereinfachung der Bedienung erzielt.

Weitere Merkmale und Vorteile der Erfindung werden anhand einiger Ausführungsbeispiele unter Bezugnahme auf die beigefügten Zeichnungen nachfolgend näher erläutert.
- Fig. 1: zeigt einen teilweise schematischen Schnitt durch eine erste Ausführungsform des erfindungsgemäßen Umstellmechanismus bei herausgezogener Handbrause,
- Fig. 2: zeigt die Ausführungsform der Fig. 1 bei hineingesteckter Handbrause,
- Fig. 3 und 4: stellen schematisch Ausführungsformen dar, bei welchen eine Übertragungsvorrichtung zwischen Umschaltvorrichtung und Umschaltventil vorgesehen ist,
- Fig. 5 und 6: stellen eine spezielle Ausführungsform dar, bei der die Umschaltvorrichtung und das Umschaltventil in einem gemeinsamen Gehäuse angeordnet sind, und
- Fig. 7: zeigt eine spezielle Ausführungsform mit von der Umschaltvorrichtung getrenntem Umschaltventil.

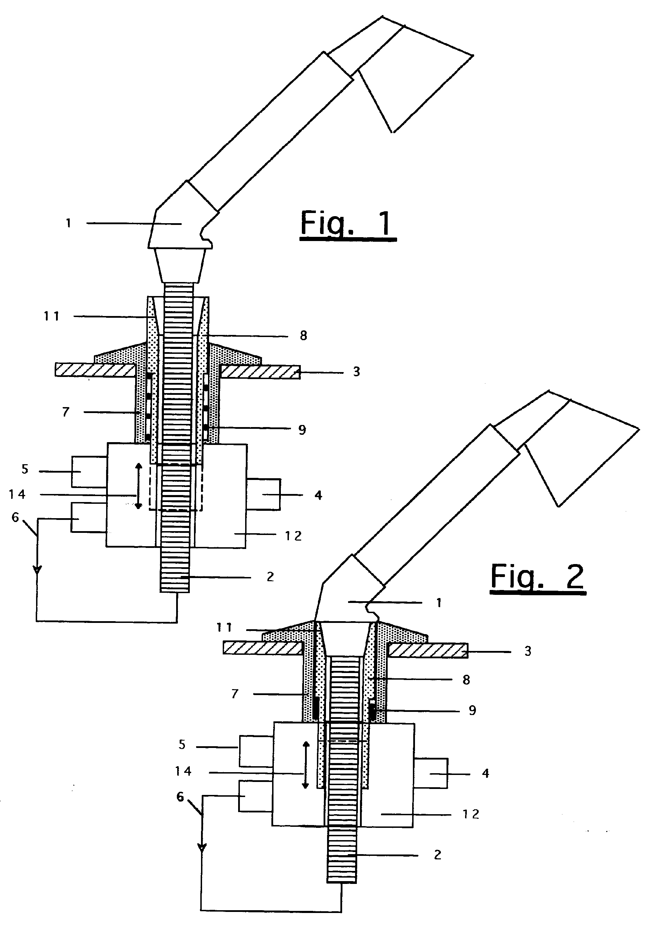

Bei der Ausführungsform des Umstellmechanismus nach den Fig. 1 und 2 ist mit 3 ein Wannenrand bezeichnet, an dem ein topfförmiges Gehäuse 7 einer Umschaltvorrichtung montiert ist, welches einen rohrförmigen, im Gehäuse 7 höhenverschiebbaren Umstellschieber 8 aufweist, der unter der Belastung eines Federelementes, z.B. einer Schraubenfeder 9,steht, die sich einerseits an einem Absatz des Umstellschiebers 8 und andererseits am Boden des Gehäuses 7 abstützt. Das obere Ende des Umstellschiebers 8 ist mit einer innenseitig kegelförmigen Aufnahmevorrichtung 11 für einen Anschlußkegel einer Handbrause 1 versehen. Der Umstellschieber 8 der Umschaltvorrichtung steht mit einem Umschaltventil 12 in Verbindung, welches alternativ die Öffnung zur Leitung 5 der Wannenarmaturen und eine Öffnung zur Leitung 6 der Handbrause 1 freigibt bzw. schließt. Das Federelement 9 wird durch das Gewicht der Handbrause zusammengedrückt. Zwischen abgehobener Brause nach Fig. 1 und eingesetzter Brause nach Fig. 2 legt der Umstellschieber 8 einen Weg 14 zurück.

Wird die Zulaufleitung 4 freigegeben, öffnet bei abgehobener Brause nach Fig.1 unter dem Einfluß der Feder 9 der Umstellschieber 8 die Leitung 6 zur Handbrause. Bei eingesetzter Brause nach Fig. 2 wird die Feder 9 zusammengedrückt und die Öffnung zur Leitung 6 geschlossen, während die Öffnung zur Leitung 5 geöffnet wird.

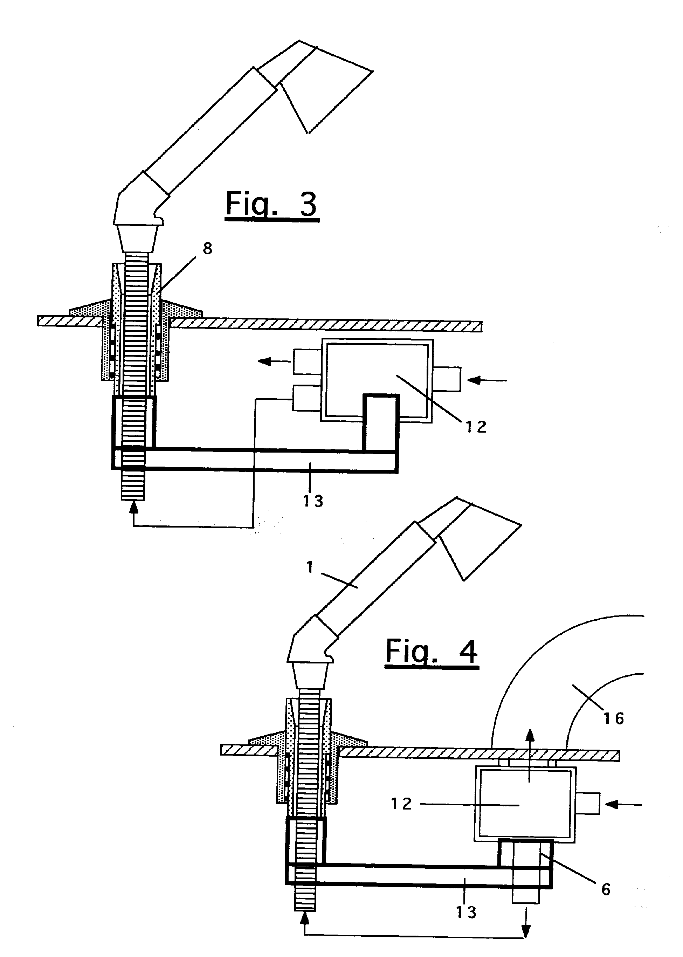

Während bei der Ausführungsform des Umstellmechanismus nach den Fig. 1 und 2 der Umstellschieber 9 in ein Gehäuse des Umschaltventils 12 unmittelbar eingreift, ist das Gehäuse des Umschaltventils 12 bei den Ausführungsformen des Umstellmechanismus nach Fig.3 und 4 seitlich angeordnet, wobei das Umschaltventil 12 vom Umstellschieber 8 über eine Übertragungsvorrichtung 13 beeinflußt wird, welche z.B. als Stänge ausgebildet sein kann und sich in horizontaler Ebene unter dem Einfluß des Umstellschiebers 8 nach oben oder unten jeweils parallel zu sich bewegen kann.

Bei der Ausführungsform des Umstellmechanismus nach Fig. 4 ist die Öffnung für die Leitung 6 der Handbrause 1 im Boden und die Öffnung für einen Wanneneinlauf 16 im Deckel des Gehäuses für das Umschaltventil 12 vorgesehen.

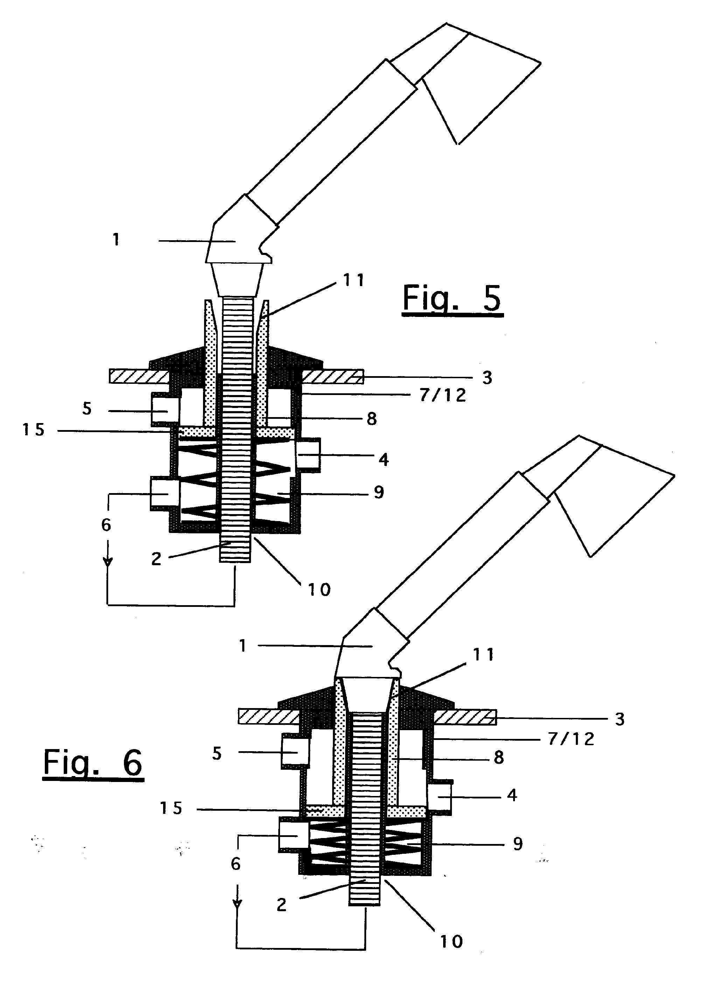

Bei der Ausführungsform des Umstellmechanismus nach den Fig. 5 und 6 ist das Gehäuse 7 der Umschaltvorrichtung zugleich das Gehäuse des Umschaltventils 12, wobei der Umstellschieber 8 bodenseitig mit einem Umstellkolben 15 versehen ist, welcher das Umschaltventil bildet und im Gehäuse 7 durch eine Feder 9 belastet ist. Der Schlauch 2 durchsetzt den Boden des Gehäuses 7 in einer Öffnung 10. Die Funktion des Umstellmechanismus ist ähnlich wie die den früheren Ausführungsbeispielen,in dem bei ausgezogenem Schlauch nach Fig. 5 der Kolben in seiner oberen Lage ist, in welcher die Zulaufleitung 4, wie Fig. 5 zeigt, mit der Leitung 6 der Handbrause 1 verbunden ist, während bei eingesetzter Handbrause 1 nach Fig. 6 der Kolben die Feder 9 niederdrückt, wodurch die Zuleitung 4 mit der Leitung 5 der Wannenarmatur kommuniziert.

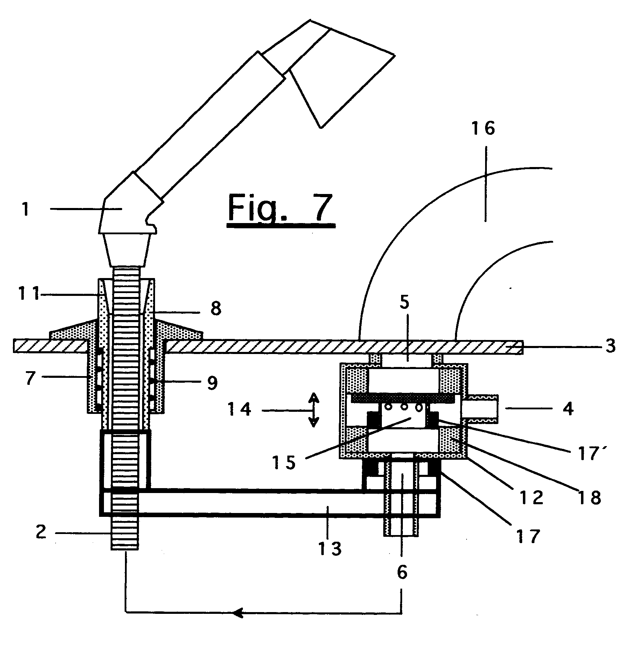

Die Konstruktion des Umstellmechanismus nach Fig. 7 ist ähnlich der nach den Fig. 3 und 4 mit dem Unterschied, daß das Umstellventil 12 ähnlich der Konstruktion nach den Fig. 5 und 6 mit einem Umstellkolben 15 versehen ist, wobei je ein Magnet 17, 17′ am umstellventilseitigen Ende der Übertragungsvorrichtung 13 und am Umstellkolben 15 vorgesehen ist. Die beiden Magnete sind zueinander abstoßend ausgerichtet, wobei der untere Magnet 17 im Führungsteil 18 geführt werden kann, sodaß bei herausgenommener Handbrause 1, wie in Fig. 7 dargestellt, unter dem Einfluß der Feder 9 und der Magneten 17, 17′ der Umstellkolben 15 nach oben gedrückt und die Leitung 4 mit der Leitung 6 verbunden wird. Wird die Handbrause 1 wieder zurückgesteckt, wird der Umstellschieber 8 nach unten gedrückt, entfernt sich der Magnet 17 vom Magnet 17′, sodaß die Magnete 17, 17′ nicht mehr aufeinander wirken und der Umstellkolben 15 wieder herunterfällt und somit die Leitung 5 zum Wanneneinlauf mit der Zulaufleitung 4 verbindet, wobei die zur Handbrause führende Leitung 6 gesperrt wird, was durch den sich im Gehäuse des Umschaltventils 12 aufbauenden Wasserdruck noch verstärkt wird.

Selbstverständlich können im Rahmen der Erfindung auch verschiedene konstruktive Abänderungen vorgenommen werden. So ist es beispielsweise möglich, das Umstellventil 12 sowie die Übertragungsvorrichtung 13 auch mechanisch, elektrisch oder pneumatisch zu steuern.

## Patentansprüche

1. Umstellmechanismus zur Steuerung des Wasserflusses von Wannenzulauf- auf Handbrausebetrieb, mit einem durch die Bewegung der Handbrause (1) betätigbaren Umschaltventil (12), welches zwischen einer die Öffnung zur Leitung (6) der Handbrause (1) freigebenden ersten Stellung und einer die Öffnung zur Leitung (5) der Wannenarmaturen freigebenden zweiten Stellung umschaltbar ist, wobei die erste Stellung bei herausgezogener und die zweite Stellung bei hineingesteckter Handbrause (1) vorliegt, dadurch gekennzeichnet, daß der das Umschaltventil (12) betätigende Umstellschieber (8) durch die Schlauchdurchführung der Handbrause (1) gebildet und parallel zur Bewegungsrichtung des Brauseschlauches (2) bewegbar ist.

2. Umstellmechanismus nach Anspruch 1, dadurch gekennzeichnet, daß der Umstellschieber (8) von einem Federelement (9), vorzugsweise einer Schraubenfeder, parallel zur Bewegungsrichtung des Brauseschlauches (2) in der richtung auf die herausgezogene Stellung hin beaufschlagt ist.

3. Umstellmechanismus nach Anspruch 2, dadurch gekennzeichnet, daß das Federelement (9) durch das Gewicht der in eine mit dem Umstellschieber (8) verbundenen Aufnahmevorrichtung (11) eingesteckten Handbrause (1) zusammendrückbar ist.

4. Umstellmechanismus nach einem der vorangehenden Ansprüche, dadurch gekennzeichnet, daß das Gehäuse (7) der Umschaltvorrichtung zugleich das Gehäuse des Umschaltventiles (12) ist, in dem der Umschaltschieber (8) parallel zur Bewegungsrichtung des Brauseschlauches (2) verschiebbar gelagert und vorzugsweise von einem Federelement (9) beaufschlagt ist (Fig. 5,6).

5. Umstellmechanismus nach einem der Ansprüche 1 bis 3, dadurch gekennzeichnet, daß das Gehäuse (7) der Umschaltvorrichtung vom Gehäuse des Umschaltventiles (12) baulich getrennt und allenfalls beabstandet davon angeordnet ist, wobei das Umschaltventil (12) durch eine Übertragungsvorrichtung (13) mit dem Umstellschieber (8) verbunden und damit von der Umschaltvorrichtung her betätigbar ist (Fig. 3, 4, 7).

6. Umstellmechanismus nach Anspruch 5, dadurch gekennzeichnet, daß eine flexible oder starre mechanische, hydraulische, pneumatische oder elektrisch/elektronische Übertragungsvorrichtung (13) zwischen dem Umschaltventil (12) und dem Umstellschieber (8) vorgesehen ist.

7. Umstellmechanismus nach einem der vorangehenden Ansprüche, dadurch gekennzeichnet, daß das Umschaltventil (12) mechanisch, pneumatisch, hydraulisch, elektrisch, magnetisch oder elektronisch betätigbar ist.

## Claims

1. A control mechanism for diverting the flow of water from the tub spout to the hand shower set, with a control valve (12) actuated by moving the hand shower set (1), which control valve (12) switches between a first position used to open the line (6) of the hand shower set (1) and a second position used to open the line (5) of the tub faucet, where the first position is selected with the hand shower set (1) removed, and the second position is selected with the hand shower set (1) inserted, characterized in that the control slider (8) which actuates the control valve (12) is formed by the hose duct of the hand shower set (1), and can be moved parallel to the direction of movement of the shower hose (2).

2. A control mechanism according to Claim 1, characterized in that the control slider (8) is loaded by a spring (9), preferably a helical spring, parallel to the direction of movement of the shower hose (2) toward the removed position.

3. A control mechanism according to Claim 2, characterized in that the spring (9) can be compressed by the weight of the hand shower set (1) inserted into a receptacle (11) connected with the control slider (8).

4. A control mechanism according to anyone of the preceding claims, characterized in that the housing (7) of the control unit is also the housing of the control valve (12), in which the control slider (8) may be moved parallel to the direction of movement of the shower hose (2), and is preferably loaded by a spring (9) (Fig. 5, 6).

5. A control mechanism according to anyone of Claims 1 to 3, characterized in that the housing (7) of the control unit is structurally separated and even located in a certain distance from the housing of the control valve (12) and the control valve (12) is connected with the control slider (8) by a transmission device (13), and therefore can be actuated by the control unit (Fig. 3, 4, 7).

6. A control mechanism according to Claim 5, characterized in that a flexible or rigid mechanical, hydraulic, pneumatic or electric/electronic transmission device (13) is provided between the control valve (12) and the control slider (8).

7. A control mechanism according to anyone of the preceding claims, characterized in that the control valve (12) can be mechanically, pneumatically, hydraulically, electrically, magnetically or electronically actuated.

## Revendications

1. Mécanisme inverseur permettant de diriger l'écoulement d'eau tantôt vers l'arrivée d'eau de la baignoire tantôt vers celle de la douchette au moyen d'une soupape d'inversion (12), actionnée par un mouvement de la douchette (1), qui peut être commutée d'une première position libérant l'arrivée d'eau (6) vers la douchette (1) à une deuxième position libérant l'arrivée d'eau vers la robinetterie (5) de la baignoire, cette soupape se trouvant dans la première position lorsque la douchette (1) est insérée dans son support et dans la deuxième position quand la douchette est retirée; ce mécanisme est caractérisé par le fait que le coulisseau inverseur (8) actionnant la soupape d'inversion (12) est formé par la gaine de passage du flexible de la douchette (1) et qu'il se meut dans le sens du déplacement du flexible (2) de la douchette.

2. Mécanisme inverseur selon sollicitation 1, caractérisé par le fait que le coulisseau inverseur (8) est repoussé par un élément ressort (9), de préférence un ressort à boudin dans le sens du déplacement du flexible de la douchette (2) vers la position de douchette retirée.

3. Mécanisme inverseur selon sollicitation 2, caractérisé par le fait que l'élément ressort (9) peut être comprimé par le poids de la douchette (1) insérée dans le support (11) en connexion avec le coulisseau inverseur (8).

4. Mécanisme inverseur selon une des sollicitations ci-dessus, caractérisé par le fait que le boîtier (7) du dispositif d'inversion est en même temps le boîtier de la soupape d'inversion (12), dans lequel le coulisseau inverseur (8) est disposé de façon à coulisser dans le sens du déplacement du flexible de la douchette (2) et est de préférence repoussé par un élément ressort (9) (Fig., 5,6).

5. Mécanisme inverseur selon une des sollicitations 1 à 3, caractérisé par le fait que le boîtier (7) du dispositif d'inversion est séparé au niveau de la construction du boîtier de la soupape d'inversion (12) et éventuellement monté à une certaine distance de celui-ci, la soupape d'inversion (12) étant raccordée au coulisseau inverseur (8) par un dispositif de transmission (13) et de ce fait peut être actionné à partir du dispositif d'inversion (Fig. 3,4,7).

6. Mécanisme inverseur selon sollicitation 5. caractérisé par le fait qu'un dispositif de transmission (13) mécanique, hydraulique, pneumatique ou électrique/électronique, souple ou rigide, est prévu entre la soupape d'inversion (12) et le coulisseau inverseur (8).

7. Mécanisme inverseur selon une des sollicitations ci-dessus, caractérisé par le fait que la soupape d'inversion (12) peut être actionnée par un système mécanique, pneumatique, hydraulique, électrique, magnétique ou électronique.
